# EUROPÄISCHE PATENTSCHRIFT

(11) **EP 2 208 306 B1**
(45) Veröffentlichungstag und Bekanntmachung des Hinweises auf die Patenterteilung: **11.07.2012**
(21) Anmeldenummer: 08846618.0
(22) Anmeldetag: 29.10.2008
(51) Int. Cl.: H04L 12/00, H04L 12/40, H04L 29/12

(54) **RECHENSYSTEM UND VERFAHREN ZUM VERWALTEN VERFÜGBARER RESSOURCEN EINES INSBESONDERE FÜR EINE STEUERUNG EINES INDUSTRIEROBOTERS VORGESEHENEN RECHENSYSTEMS**
DATA PROCESSING SYSTEM AND METHOD FOR MANAGING AVAILABLE RESOURCES OF A DATA PROCESSING SYSTEM PROVIDED, IN PARTICULAR, FOR CONTROLLING AN INDUSTRIAL ROBOT
SYSTÈME INFORMATIQUE ET PROCÉDÉ DE GESTION DES RESSOURCES DISPONIBLES D'UN SYSTÈME INFORMATIQUE PRÉVU EN PARTICULIER POUR LA COMMANDE D'UN ROBOT INDUSTRIEL

(30) Priorität: 05.11.2007 DE 102007052673
(43) Veröffentlichungstag der Anmeldung: 21.07.2010
(73) Patentinhaber: KUKA Laboratories GmbH, 86165 Augsburg (DE)
(72) Erfinder: MÜLLER, Stefan, 86159 Augsburg (DE)
(74) Vertreter: Patentanwälte Funk & Böss GbR
(86) Internationale Anmeldenummer: PCT/EP2008/064645
(87) Internationale Veröffentlichungsnummer: WO 2009/059918

(56) Entgegenhaltungen:
- WO-A-01/50690
- WO-A-2004/030871
- US-B1- 6 574 681
- JIMING GAO ET AL: "Design of broadband IPv6/IPv4 dual-stack access router based on service stream" PARALLEL AND DISTRIBUTED COMPUTING, APPLICATIONS AND TECHNOLOGIES, 200 3. PDCAT'2003. PROCEEDINGS OF THE FOURTH INTERNATIONAL CONFERENCE ON AUG. 27 - 29, 2003, PISCATAWAY, NJ, USA,IEEE, 27. August 2003 (2003-08-27), Seiten 2-6, XP010661221 ISBN: 978-0-7803-7840-7

## Beschreibung

Die Erfindung betrifft ein Verfahren zum Verwalten verfügbarer Ressourcen eines insbesondere für eine Steuerung eines Industrieroboters vorgesehenen Rechensystems und ein Rechensystem insbesondere zum Steuern eines Industrieroboters.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen ein Rechensystem, beispielsweise einen Steuerrechner, auf, das die Bewegung der Bewegungsachsen steuert bzw. regelt.

Ist das Rechensystem z.B. mit weiteren Rechnern beispielsweise auf Basis des Ethernets vernetzt, dann können empfangene Datenpakete die Ressourcen des Rechensystems derart stark auslasten, dass ein zuverlässiger Betrieb des Industrieroboters verhindert wird. Es ist auch möglich, dass der Betrieb des Industrieroboters die Echtzeiteigenschaften der Verarbeitung der Datenpakete negativ beeinflusst.

Die Aufgabe der Erfindung ist es daher, ein verbessertes Verfahren zum Verwalten verfügbarer Ressourcen eines für eine Steuerung eines Industrieroboters vorgesehenen Rechensystems anzugeben.

Eine weitere Aufgabe der Erfindung ist es, ein Rechensystem insbesondere zum Steuern eines Industrieroboters anzugeben, das derart eingerichtet ist, dass Vorraussetzungen zum verbesserten Verwalten der verfügbareren Ressourcen des Rechensystems gegeben sind.

WO 01/50690 A1 offenbart ein Paketvermittlungsverfahren in einem Ethernet Switch, bei dem empfangenen Paketen Prioritäten anhand verschiedener Kriterien zugeordnet werden können.

Die Aufgabe der Erfindung wird gelöst durch ein Verfahren zum Verwalten verfügbarer Ressourcen eines insbesondere für eine Steuerung eines Industrieroboters vorgesehenen Rechensystems, aufweisend folgende Verfahrensschritte:
- Empfangen einer Mehrzahl von Datenpaketen mittels eines Rechensystems, wobei jedes der Datenpakete eine Zieladresse aufweist, denen durch das Rechensystem vorab unterschiedliche Prioritätsklassen zugeordnet sind, und
- zeitliches Zuordnen von Tasks zu Ressourcen des Rechensystems zum Bearbeiten der einzelnen empfangenen Datenpakete aufgrund der relevanten Prioritätsklasse der Zieladresse des empfangen relevanten Datenpakets.

Die Aufgabe der Erfindung wird auch gelöst durch ein Rechensystem insbesondere zum Steuern eines Industrieroboters, aufweisend Ressourcen und ein Betriebssystem zum Verwalten der Ressourcen, wobei das Rechensystems eingerichtet ist, Zieladressen aufweisende Datenpakete zu empfangen, wobei den Zieladressen durch das Rechensystem vorab unterschiedliche Prioritätsklassen zugeordnet sind und das Betriebssystem die Tasks zu den Ressourcen zum Bearbeiten der einzelnen empfangenen Datenpakete aufgrund der relevanten Prioritätsklasse der Zieladresse des empfangen relevanten Datenpakets zeitlich zuordnet.

Eine Aufgabe eines Betriebssystems im Allgemeinen ist die Verwaltung der verfügbaren Ressourcen des Rechensystems, wie z.B. dessen Prozessor oder Prozessoren, Arbeitsspeicher oder Ein-Ausgabe-Geräte. Zum Verwalten der Ressourcen gehört auch die zeitliche Zuordnung (Schedule) von Tasks zu den Ressourcen. Ein Task ist ein Prozess, der auf der untersten Systemebene des Rechensystems läuft.

Das erfindungsgemäße Rechensystem bzw. das erfindungsgemäße Verfahren ist insbesondere dafür vorgesehen, u.A. den Industrieroboter bzw. dessen Bewegungsablauf zu steuern. Industrieroboter sind, wie bereits obenstehend erläutert, Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Die Bewegungen der Steuerachsen werden im Allgemeinen z.B. von einem Steuerrechner und im Speziellen von dem erfindungsgemäßen Rechensystem gesteuert.

Das erfindungsgemäße Rechensystem ist vorgesehen, die Datenpakete zu empfangen. Die Datenpakete können insbesondere E-thernetdatenpakete sein. Das Ethernet ist eine kabelgebundene oder wahlweise über eine drahtlose Verbindung realisierte Datennetztechnologie für lokale Datennetze und ermöglicht den Datenaustausch in Form von Datenrahmen zwischen allen in einem lokalen Netz angeschlossenen Geräten. Das Ethernet ist weitgehend in der IEEE-Norm 802.3 standardisiert.

Die Datenpakete können insbesondere für den laufenden Betrieb des Industrieroboters, z.B. für dessen Steuerung, oder können für weitere Anwendungen bestimmt sein, wie z.B. eine Anfrage an das Rechensystem, eine Archivierung von dem Industrieroboter zugeordneten Daten durchzuführen.

Je nach Zielsetzung der empfangenen Datenpakete ist es nötig, dass diese möglichst schnell, insbesondere in Echtzeit, vom erfindungsgemäßen Rechensystem verarbeitet werden. Dies trifft insbesondere für Datenpakete zu, die der Industrieroboter für die aktuelle Steuerung, im Allgemeinen für den aktuell laufenden Betrieb, benötigt. Die Bearbeitung anderer Datenpakete, wie z.B. die angesprochene Anforderung einer Archivierung von Daten, ist dagegen weniger zeitkritisch.

In der Informatik wird zwischen den Begriffen "Echtzeit" und "Modellzeit" unterschieden. Echtzeit bezieht sich auf die Zeit, die Abläufe in der "realen Welt" verbrauchen. Modellzeit hingegen bezieht sich dagegen auf die von einem Rechenprogramm selbstverwaltete Laufzeit.

Unter einem echtzeitfähigen System kann man ein System verstehen, das auf ein Ereignis innerhalb eines vorgegebenen Zeitrahmens reagieren muss. Der vorgegebene Zeitrahmen hängt von der jeweiligen Aufgabe ab, die mit Echtzeit verarbeitet werden soll, und kann beispielsweise im Millisekundenbereich z.B. für schnelle digitale Steuerungs- und/oder Regelungsaufgaben oder auch im Sekundenbereich z.B. für eine Temperaturregelungen oder Füllstandsüberwachungen liegen.

Bisweilen unterscheidet man zwischen weicher und harter Echtzeit. Bei der sogenannten harten Echtzeit bedeutet ein Überschreiten des vorgegebenen Zeitrahmens einen Fehler. Bei der sogenannten weichen Echtzeit arbeitet dagegen das System die relevanten Eingaben in der Regel innerhalb des vorgegebenen Zeitrahmens ab, wobei grundsätzlich ein vereinzeltes Überschreiten des vorgegebenen Zeitrahmens möglich ist und zu keinem Fehler führt.

Den empfangenen Datenpaketen sind jeweils eine Zieladresse zugeordnet. Die Zieladresse ist z.B. eine IP Zieladresse. Zumindest eine der Zieladressen kann einem Subnetz des Rechensystems zugeordnet sein. Erfindungsgemäß wurden vorab den einzelnen Zieladressen unterschiedliche Prioritätsklassen zugeordnet. Somit ist es dem Betriebssystem des erfindungsgemäßen Rechensystems möglich, den einzelnen empfangenen Datenpaketen aufgrund der Prioritätsklassen ihrer Zieladressen bestimmte Prioritäten zuzuordnen. Die dem relevanten empfangenen Datenpaket zugeordnete Priorität entspricht dabei der Prioritätsklasse der Zieladresse dieses Datenpakets. Aufgrund der zugeordneten Prioritäten werden die Datenpakete vorrangig oder nachrangig verarbeitet, indem das Betriebssystem die Tasks zu den Ressourcen zum Bearbeiten der einzelnen empfangenen Datenpakete aufgrund der relevanten Prioritätsklasse zeitlich zuordnet.

Das erfindungsgemäße Rechensystem ist nach einer Ausführungsform ein Echtzeitsystem, d.h. das Betriebssystem des erfindungsgemäßen Rechensystems ist gemäß dieser Variante ein Echtzeitbetriebssystem.

Auf dem Rechensystem können verschiedene Prozesse gleichzeitig ablaufen. Aufgrund der Priorität der empfangenen Datenpakete, die aufgrund ihrer Zieladressen bestimmt wird, kann das Betriebssystem das Rechensystem derart verwalten, dass die empfangenen Datenpakete mit unterschiedlicher Priorität abgearbeitet werden. Des Weiteren ist es nicht nötig, empfangene Datenpakete zunächst auszupacken, sodass Datenpakete mit niedriger Priorität im Wesentlichen nicht vorverarbeitet zu werden brauchen, um deren Priorität zu ermitteln. Dadurch kann gegebenenfalls unnötiger Rechenaufwand vermieden werden.

Folglich erhalten die Zieladressen gemäß dieser Ausführungsform eine gesonderte Task-Priorität im Scheduling des Echtzeitbetriebssystems, wodurch ein implizites Prioritätsschema der Bearbeitung empfangener Datenpakete ermöglicht wird. Dadurch ergibt sich die Möglichkeit, die notwendige Fairness der Rechenzeitverteilung des Rechensystems zur Einhaltung von Echtzeitkategorien zu gewährleisten.

Nach einer Variante des erfindungsgemäßen Verfahrens werden empfangene Datenpaketen in den Zieladressen zugeordneten Zwischenspeichern zwischengespeichert.

Ist beispielsweise ein Zwischenspeicher voll, dann wird nach einer Ausführungsform des erfindungsgemäßen Verfahrens ein empfangenes Datenpaket oder ein bereits im entsprechenden Zwischenspeicher gespeichertes Datenpaket verworfen, wenn das Rechensystem ein Datenpaket empfängt oder bereits empfangen hat, dieses aber noch nicht abgearbeitet wurde, dessen Zieladresse eine höhere Prioritätsklasse zugeordnet ist. Somit ist es möglich, dass die Datenpakete, deren Zieladresse der höchsten Prioritätsklasse zugeordnet ist, zuverlässig mit der höchsten Priorität insbesondere in Echtzeit bearbeitet werden.

Das erfindungsgemäße Rechensystem weist nach einer Variante eine CPU zur Steuerung des Industrieroboters auf, auf der der Steuerung des Industrieroboters zugeordnete Tasks und weitere Tasks laufen.

Gemäß einer Ausführungsform des erfindungsgemäßen Verfahrens bzw. des erfindungsgemäßen Rechensystems ist es vorgesehen, für die Steuerung des Industrieroboters vorgesehene Datenpakete und/oder Datenpakete, die einen Informationsaustausch des Industrieroboters mit wenigstens einem weiteren Industrieroboter erlauben, mit der Zieladresse der höchsten Prioritätsklasse zu versehen. Somit ist es einerseits möglich, den Industrieroboter in Echtzeit im laufenden Betrieb mittels des erfindungsgemäßen Rechensystems zu betreiben, obwohl das Rechensystem während des laufenden Betriebs auch für den laufenden Betrieb als solchen unnötige Datenpakete erhält. Diese Variante erlaubt auch das Zusammenwirken des Industrieroboters mit einem oder mehreren weiteren Industrierobotern im laufenden Betrieb, für den der mit dem erfindungsgemäßen Rechensystem gesteuerte Industrieroboter Datenpakete in Echtzeit bearbeiten muss, die von dem wenigsten einen weiteren Industrieroboter stammen.

Nach einer Variante des erfindungsgemäßen Verfahrens sind drei verschiedene Prioritätsklassen vorgesehen. In diesem Fall kann es z.B. vorgesehen sein, dass die Zieladresse mit der niedrigsten Prioritätsklasse für Datenpakete vorgesehen ist, deren Bearbeitung nicht zeitkritisch ist oder die gegebenenfalls bei einer relativ starken Auslastung der Ressourcen des Rechensystems unbearbeitet bleiben oder auch verworfen werden können. Datenpakete mit diesen Zieladressen sind z.B. Datenpakete, die für eine Datenarchivierung, eine Konfiguration des Rechensystems und/oder eine Diagnose des Rechensystems vorgesehen sind.

Datenpakete mit der Zieladresse der mittleren Prioritätsklasse sind z.B. einem an das Rechensystem anschließbaren Bediengerät des Industrieroboters zugeordnet. Ein solches Bediengerät ist beispielsweise ein Programmierhandgerät, mit dem der Bewegungsablauf des Industrieroboters z.B. im Rahmen einer Teach-In Programmierung festgelegt werden kann.

Datenpakete mit der Zieladresse der höchsten Prioritätsklasse sind z.B. für einen Informationsaustausch des Industrieroboters mit weiteren Industrierobotern bestimmt. Dadurch ist es möglich, dass mehrere Industrieroboter gemeinsam eine Aufgabe bearbeiten können, wobei ein möglichst schneller Informationsaustausch zwischen den Industrierobotern während des aktuell laufenden Betriebs nötig ist, damit die Industrieroboter die Aufgabe zufriedenstellend insbesondere in Echtzeit bearbeiten können.

Mittels dieser Variante des erfindungsgemäßen Verfahrens bzw. des erfindungsgemäßen Rechensystems ist es z.B. möglich, dass während des Betriebs der Robotersteuerung, die hochpriore zyklische (Roboter-) Tasks darstellen,
a) eine durchgängige Kommunikation von Nichtechtzeitdaten zu Subnetzen ermöglicht wird,
b) Echtzeitdaten mit wenigstens einem weiteren Industrieroboter ausgetauscht werden können,
c) ein Feldbus-Protokoll mit Echtzeitanforderungen (z.B. ProfiNet) gefahren werden kann und/oder
d) optional ein weiteres I/O-Protokoll mit Echtzeitanforderungen betrieben werden kann.

Um eine Unterteilung in implizite Echtzeitklassen zu ermöglichen, können die den Datenströmen a)-d) zugeordneten Kommunikations-Stacks (Datenpakete) einen "virtuellen Treiber" zum Binden an den darunter liegenden Treiber der Netzwerk-Controller (virtuelles Interface) erhalten. Jedem "virtuellen Treiber" ist also eine eigene priorisierbare Task sowie "Memory Queues" für die Bearbeitung der Datenpakete zugeordnet, sowie ein gebundener Kommunikations-Stack. Andere Bezeichnungen für Queue sind z.B. Warteschlange oder Puffer. Es entsteht somit ein in der Handhabung offeneres und für ein Rechensystem zur Steuerung eines Industrieroboters geeigneteres Echtzeit-Taskschema zur Bearbeitung der Datenpakete in verschiedenen Klassen als dies mit bestehenden Technologien, wie beispielsweise IEEE 802.1p und verwandte wie IEEE 802.1Q, VLAN realisierbar wäre.

Ein mögliches Prioritätsschema (absteigend) könnte dann sein:
- Priorität 1:: d)
- Priorität 2:: b)
- Priorität 3:: c)
- Priorität 4:: a)

Zum Beispiel eine zeitweise hohe Datenrate an Nichtechtzeitdaten (a), wie z. B. Remote Desktop, Archivierung, wird nachrangig gegenüber Echtzeitdaten gemäß b)-d) sowie der Robotersteuerung bearbeitet und "gequeued". Die Datenpakete gemäß a) können z.B. über einen einstellbaren Schwellwert der zugehörigen "memory queue" dann auch verworfen werden, falls momentan die freie Rechenzeit für hochpriore Aufgaben benötigt wird.

Bei Verwendung von virtuellen Interfaces, Zwischenspeichern und einem Echtzeitbetriebssystem erhalten somit die virtuellen Netzwerk Interfaces gesonderte Task-Prioritäten (Prioritätsklassen) im Scheduling des Echtzeitbetriebssystems sowie priorisierbare Speicherbereiche für die Bearbeitung der Datenpakete. Demnach ist es möglich, ein implizites Prioritätsschema der Paketbearbeitung zu realisieren und somit die notwendige Fairness der Rechenzeitverteilung zur Einhaltung von Echtzeitkategorien zu ermöglichen.

Dieses implizite Prioritätsschema besitzt nun vor allem in der Realisierung von Netzwerken bestehend aus diversen und heterogenen Teilnehmer-Stationen den Vorteil, dass es von den Teilnehmer-Stationen nicht zwingend ein bestimmtes Tagging der Datenpakete zur Realisierung eines so genannten "Quality Of Service" fordert, es dieses Tagging jedoch, falls vorhanden, zur Verbesserung eines "Quality Of Service" nutzen kann. Dieses implizite Prioritätsschema besitzt zudem auf Betriebssystemseite der Steuerung des Industrieroboters den Vorteil, dass die Software-Schnittstellen der auf die physikalische Schicht aufsetzende Schicht zur Einbindung von geeigneter Kommunikations-Software, durch das Prioritätsschema nicht verändert werden müssen, so dass die Standard-Schnittstellen des Betriebssystems erhalten bleiben.

Es entsteht ein "Generischer Echtzeit Multiplexer", insbesondere für eine Ethernet-Kommunikation, welcher nicht notwendigerweise auf die Technologien wie "VLAN" und "Priority Tagging" angewiesen ist, und somit auch deren Restriktionen nicht beinhaltet. "Generisch" heißt zudem, dass sein Funktionsumfang aus den Elementen "Virtuelle Interfaces" modular zusammengestellt und diese auf verschiedene Szenarien hin konfiguriert werden können.

Insbesondere können dann alle weiteren relevanten Teilfunktionen zu einem "Generischen Echtzeit Multiplexer", insbesondere zu einem "Generischen Ethernet Echtzeit Multiplexer" vereint werden, welcher zusammen mit einer Robotersteuerung auf einem CPU Core betrieben werden kann.

Das erfindungsgemäße Rechensystem kann auch eine Mehrzahl von Interfaces aufweisen, denen unterschiedliche Prioritätsklassen zugeordnet sind und die vorgesehen sind, die Datenpakete zu empfangen, wobei das Betriebssystem die Tasks zu den Ressourcen (zum Bearbeiten der einzelnen empfangenen Datenpakete aufgrund der relevanten Prioritätsklasse des Interfaces zeitlich zuordnet, das das relevante Datenpaket empfangen hat.

Den Interfaces dieser Variante des erfindungsgemäßen Rechensystems sind die unterschiedliche Prioritätsklassen zugeordnet. Somit ist es dem Betriebssystem des erfindungsgemäßen Rechensystem möglich, den einzelnen mit den Interfaces empfangenen Datenpaketen aufgrund der Prioritätsklassen bestimmte Prioritäten zuzuordnen. Die dem relevanten empfangenen Datenpaket zugeordnete Priorität entspricht dabei der Prioritätsklasse des Interfaces, das dieses Datenpaket empfängt. Aufgrund der zugeordneten Prioritäten werden die Datenpakete vorrangig oder nachrangig verarbeitet, indem das Betriebssystem die Tasks zu den Ressourcen zum Bearbeiten der einzelnen empfangenen Datenpakete aufgrund der relevanten Prioritätsklasse zeitlich zuordnet.

Den einzelnen Interfaces können die Zieladressen zugeordnet sein, sodass die Datenpakete von vorab festgelegten Interfaces empfangen werden können. Je nach gewünschter Priorität zur Bearbeitung der Datenpakete durch das erfindungsgemäße Rechensystem ist es demnach möglich, die Datenpakete mittels geeigneter Adressierung an das gewünschte Interface zu senden, damit dieses Datenpaket entsprechend der Prioritätsklasse dieses Interfaces vom Rechensystem bearbeitet wird.

Die Interfaces können z.B. physikalische, aber auch virtuelle Interfaces sein. Die virtuellen Interfaces können z.B. mittels eines Software-Codes realisiert werden.

Nach einer Variante des erfindungsgemäßen Verfahrens werden empfangene Datenpaketen in den Interfaces zugeordneten Zwischenspeichern zwischengespeichert. Bei Verwendung von insbesondere virtuellen Interfaces ist es demnach beispielsweise möglich, dass jedes virtuelle Netzwerk Interface eine gesonderte Task-Priorität (Prioritätsklasse) im Scheduling des (Echtzeit-) Betriebssystems sowie priorisierbare Speicherbereiche für die Bearbeitung der Datenpakete erhält.

Ist beispielsweise ein Zwischenspeicher voll, dann wird nach einer Ausführungsform des erfindungsgemäßen Verfahrens ein empfangenes Datenpaket oder ein bereits im entsprechenden Zwischenspeicher gespeichertes Datenpaket verworfen, wenn ein Interface mit einer höheren Prioritätsklasse ein Datenpaket empfängt oder bereits empfangen hat, dieses aber noch nicht abgearbeitet wurde. Somit ist es möglich, dass die Datenpakete, die mit dem Interface mit der höchsten Prioritätsklasse empfangen wurden, zuverlässig mit der höchsten Priorität insbesondere in Echtzeit bearbeitet werden.

Ausführungsbeispiele der Erfindung sind exemplarisch in den beigefügten schematischen Zeichnungen dargestellt. Es zeigen:
- Fig. 1: mehrere Industrieroboter mit Steuerrechner,
- Fig. 2: eine Schnittselle einer der Steuerrechner,
- Fig. 3: ein Flussdiagramm zum Verwalten verfügbarer Ressourcen einer der Steuerrechner und
- Fig. 4: ein weiters Schaubild zur Veranschaulichung der Erfindung.

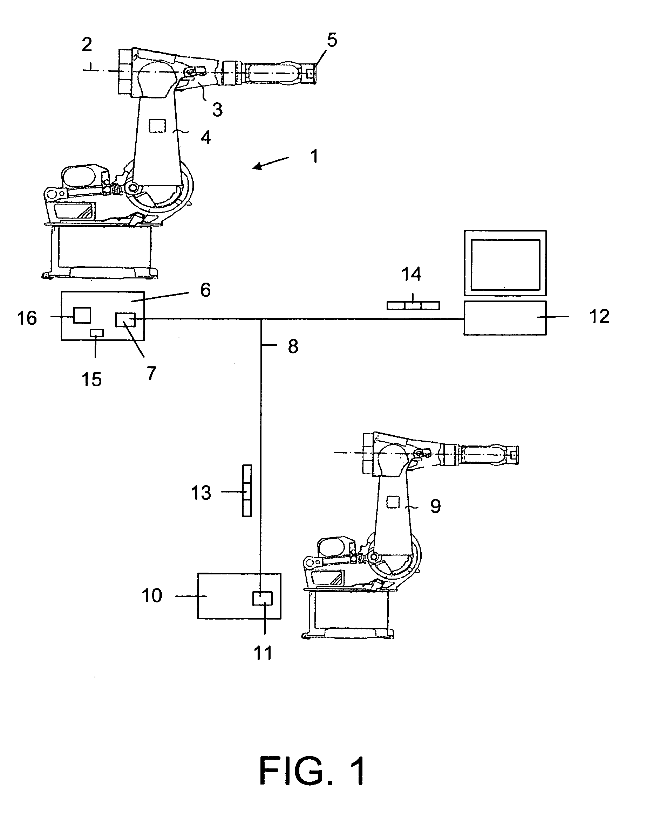

Die Fig. 1 zeigt einen ersten Industrieroboter 1 mit einer Kinematik für Bewegungen in beispielsweise sechs Freiheitsgraden. Der erste Industrieroboter 1 weist in allgemein bekannter Weise sechs Bewegungsachsen, Gelenke, Hebel 3, 4 und einen Flansch 5 auf. In der Figur 1 ist nur eine der Bewegungsachsen mit dem Bezugszeichen 2 versehen.

Jede der Bewegungsachsen 2 wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter 1 weist ferner einen Steuerrechner 6 auf, der mit den Antrieben des Industrieroboters 1 in nicht dargestellter Weise verbunden ist und diese in allgemein bekannter Weise mittels eines auf dem Steuerrechner 6 laufenden Rechenprogramms steuert, sodass der Flansch 5 des Industrieroboters 1 eine vorgegebene Bewegung durchführt. Auf dem Steuerrechner 6 läuft ein dem Fachmann im Allgemeinen bekanntes Echtzeitbetriebssystem, das die Ressourcen des Steuerrechners 6, wie einen Prozessor 16 oder nicht näher dargestellte Arbeitsspeicher, verwaltet. Zur Verwaltung der Ressourcen gehört auch die zeitliche Zuordnung (Schedule) von aktiven Tasks zu diesen Ressourcen.

Die Figur 1 zeigt neben dem ersten Industrieroboter 1 noch einen zweiten Industrieroboter 9, der im Falle des vorliegenden Ausführungsbeispiels im Wesentlichen wie der erste Industrieroboter 1 aufgebaut ist und einen Steuerrechner 10 umfasst.

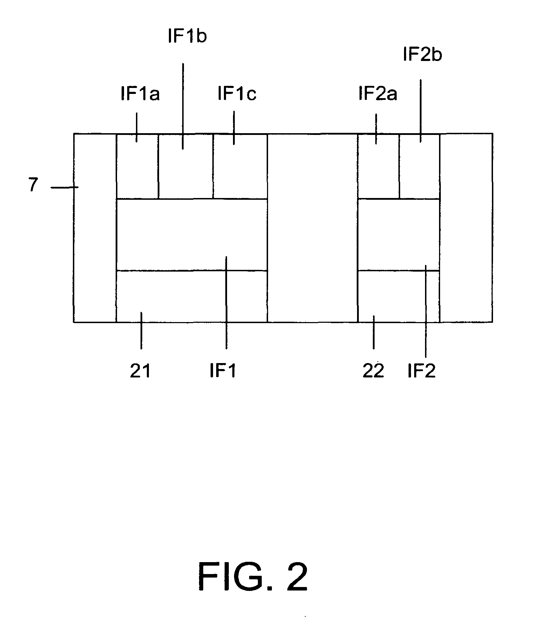

Im Falle des vorliegenden Ausführungsbeispiels weist der Steuerrechner 6 des ersten Industrieroboters 1 eine in der Figur 2 näher dargestellte Schnittstelle 7 und der Steuerrechner 10 des zweiten Industrieroboters 9 eine Schnittstelle 11 auf, die der Schnittstelle 7 des Steuerrechners 6 ähnelt.

Im Falle des vorliegenden Ausführungsbeispiels sind die beiden Steuerrechner 6, 10 mittels der Schnittstellen 7, 11 an ein Ethernet 8 als Beispiel eines Datennetzes angeschlossen und können über das Ethernet 8 mittels Datenpakete 13 kommunizieren. Des Weiteren ist an das Ethernet 8 ein Rechner 12 angeschlossen, auf dem ein Standardbetriebssystem läuft. Der Rechner 12 kann ebenfalls mit den beiden Steuerrechnern 6, 10 über das Ethernet 8 mittels Datenpakete 14 kommunizieren.

Im Falle des vorliegenden Ausführungsbeispiels umfasst die Schnittstelle 7 eine erste Netzwerkkarte 21 mit einem ersten physikalischen Interface IF1 und eine zweite physikalische Netzwerkkarte 22 mit einem zweiten physikalischen Interface 22. Mit dem ersten physikalischen Interface IF1 werden ein erstes, zweites und drittes virtuelles Interface IF1a, IF1b, IF1c und mit dem zweiten physikalischen Interface IF2 werden ein viertes und ein fünftes virtuelles Interface IF2a, IF2b realisiert.

Während des Betriebs des ersten Industrieroboters 1 sind den für die Steuerung des Industrieroboters 1 zugeordneten Tasks des Steuerrechners 6 hochpriore zyklische Robotertasks zugeordnet, die der Steuerrechner 6 bevorzugt abarbeiten soll.

Zusätzlich ist es im Falle des vorliegenden Ausführungsbeispiels vorgesehen, eine durchgängige Kommunikation mit Nichtechtzeitdaten zu Subnetzen, z.B. zum Rechner 12, zu ermöglichen. Diese Kommunikation läuft über die Datenpakete 14 ab. Bei dieser Kommunikation handelt es sich beispielsweise um eine Anfrage einer Datenarchivierung des Rechners 12 an den Steuerrechner 6 des ersten Industrieroboters 1, aufgrund derer der Steuerrechner 6 Daten für eine Archivierung dem Rechner 12 übermitteln soll. Dieser Datenaustausch läuft im Falle des vorliegenden Ausführungsbeispiels über das erste virtuelle Interface IF1a der ersten Netzwerkkarte 21.

Im Falle des vorliegenden Ausführungsbeispiels ist es ferner vorgesehen, dass der Steuerrechner 6 des ersten Industrieroboters 1 Daten mit dem Steuerrechner 10 des zweiten Industrieroboters 9 mittels der Datenpakete 13 in Echtzeit austauscht. Dieser Datenaustausch erfolgt beispielsweise über das zweite virtuelle Interface IF1b der ersten Netzwerkkarte 21.

Es kann auch noch vorgesehen sein, dass ein Feldbus-Protokoll mit Echtzeitanforderungen (z.B. ProfiNet) beispielsweise über eines der virtuellen Interfaces IF2a, IF2b der zweiten Netzwerkkarte 22 gefahren wird.

Optional kann noch ein weiteres I/O-Protokoll mit Echtzeitanforderungen, z.B. EtherCat beispielsweise über das dritte virtuelle Interface IF1c der ersten Netzwerkkarte 21 betrieben werden.

Ferner weist der Steuerrechner 6 den Interfaces IF1a-IF1c, IF2a, IF2b zugeordnete Zwischenspeicher 15 gegebenenfalls zum Zwischenspeichern empfangener Datenpakete 13, 14 auf.

Des Weiteren sind den fünf virtuellen Interfaces IF1a-IF1c, IF2a, IF2b Prioritätsklassen zugeordnet, aufgrund derer mit dem entsprechende Interface IF1a-IF1c, IF2a, IF2b empfangene Datenpakete 13, 14 mit unterschiedlich hoher Priorität vom Steuerrechner 6 abgearbeitet werden. Um die Unterteilung in implizite Prioritätsklassen zu ermöglichen, erhalten im Falle des vorliegenden Ausführungsbeispiels die den obenstehend genannten Datenströme zugeordneten Kommunikations-Stacks einen "virtuellen Treiber" zum Binden an den darunterliegenden Treiber der Netzwerkkarten 21, 22. Jedem "virtuelle Treiber" ist also eine eigene priorisierbare Task sowie Speicherqueues für die Bearbeitung der Datenpakete 13, 14 zugeordnet, sowie ein gebundener Kommunikations-Stack.

Im Falle des vorliegenden Ausführungsbeispiels ist dem zweiten virtuellen Interface IF1b, mit dem vom zweiten Industrieroboter 9 stammende Datenpakete 13 empfangen werden, die höchste Prioritätsklasse zugeordnet, sodass der Steuerrechner 6 des ersten Industrieroboter 1 mit diesem Interface IF1b empfangene Datenpakete mit Echtzeit abarbeitet.

Im Falle des vorliegenden Ausführungsbeispiels ist dem ersten virtuellen Interface IF1a, mit dem der Steuerrechner 6 des ersten Industrieroboters 1 z.B. die Datenpakete 14 für eine Anfrage einer Datenarchivierung vom Rechner 12 empfängt, die geringste Prioritätsklasse zugeordnet. Diese Datenpakete 14 arbeitet der Steuerrechner 6 demnach mit nachrangiger Priorität, insbesondere in Nicht-Echtzeit ab, und verwirft gegebenenfalls empfangene oder dem ersten virtuellen Interface IF1a zugeordneten Zwischenspeicher 15 zwischengespeicherte Datenpakete 14, wenn der Steuerrechner 6 noch höherpriore Datenpakete abzuarbeiten hat oder empfängt. Außerdem kann der Steuerrechner 6 auch noch derart ausgeführt sein, dass er das Abarbeiten eines niederprioren Datenpakets, insbesondere eines Datenpaketes, das nicht mit Echtzeit abgearbeitet werden muss, unterbricht, um mehr Ressourcen für das Abarbeiten eines höherprioren Datenpakets bereitstellen zu können.

Dem zweiten virtuellen Interface IF1b ist im Falle des vorliegenden Ausführungsbeispiels die höchste Priorität zugeordnet, sodass mit diesem virtuellen Interface IF1b empfangene Datenpakete, wie beispielsweise das vom zweiten Industrieroboter 9 stammende Datenpaket 13 mit der höchsten Priorität abgearbeitet werden.

Den vierten und fünften virtuellen Interfaces IF2a, IF2b ist im Falle des vorliegenden Ausführungsbeispiels ebenfalls eine relativ hohe Prioritätsklasse zugeordnet, die jedoch niedriger als die Prioritätsklasse des zweiten Interfaces IF1b ist. Mit dem vierten oder fünften virtuellen Interface IF2a, IF2b empfangene Datenpakete werden ebenfalls in Echtzeit abgearbeitet, wobei die Anforderungen an den vorgegebenen Zeitrahmen, innerhalb dem der Steuerrechner 6 auf mit diesen Interfaces IF2a, IF2b empfangenen Datenpaketen reagieren muss, weniger strikt als die Anforderungen für das zweite virtuelle Interface IF1b sind. D.h. der Zeitrahmen, innerhalb dem der Steuerrechner 6 auf mit dem zweiten virtuelle Interface IF1b empfangenen Datenpaketen reagiert, ist kleiner als der Zeitrahmen, innerhalb dem der Steuerrechner 6 auf mit dem vierten oder fünften virtuellen Interface IF2a, IF2b empfangenen Datenpaketen reagiert.

Dem dritten virtuellen Interface IF1c, mit dem optional der Steuerrechner 6 ein weiteres I/O-Protokoll mit Echtzeitanforderung empfangen kann, ist ebenfalls eine hoher Prioritätsklasse zugeordnet, sodass mit diesem Interface IF1c empfangene Datenpakete ebenfalls mit Echtzeit abgearbeitet werden. Die Echtzeit-Anforderungen des dritten Interfaces IF1c ist kleiner als die Echtzeit-Anforderungen des zweiten virtuellen Interfaces IF1b, jedoch größer als die Echtzeit-Anforderungen des vierten und fünften Interfaces IF2b, IF2c.

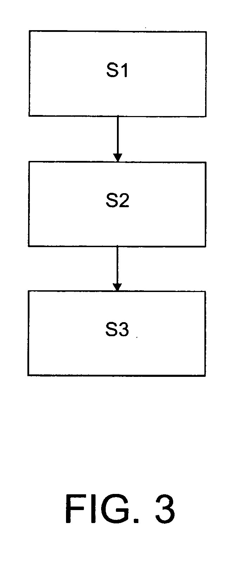

Somit entsteht ein Echtzeit-Taskschema zur Bearbeitung der Datenströme in verschiedenen Klassen, das mittels eines in der Figur 3 dargestellten Flussdiagramms veranschaulicht ist.

Im Betrieb des ersten Industrieroboters 1 empfängt dieser mehrere Datenpakete 13, 14 mittels der virtuellen Interfaces IF1a-IF1b, IF2a, IF2b, wobei den Interfaces IF1a-IF1b, IF2a, IF2b die unterschiedlichen Prioritätsklassen zugeordnet sind, Schritt S1 des Flussdiagramms.

Das Echtzeitbetriebssystem des Steuerrechners 6 ordnet zeitlich Tasks zu den Ressourcen des Steuerrechners 6 zum Bearbeiten der einzelnen empfangenen Datenpakete 13, 14 aufgrund der relevanten Prioritätsklasse des Interface IF1a-IF1c, IF2a, IF2b, das das relevante Datenpaket 13, 14 empfangen hat, zu, Schritt S2.

Empfängt eines der Interfaces des Steuerrechners 6 ein Datenpaket mit einer niedrigeren Prioritätsklasse als ein Interface, das ebenfalls ein Datenpaket empfängt, dann kann es auch vorgesehen sein, dass das mit dem Interface empfangene Datenpaket, dem die niedrigere Prioritätsklasse zugeordnet ist, verworfen wird, Schritt S3 des Flussdiagramms.

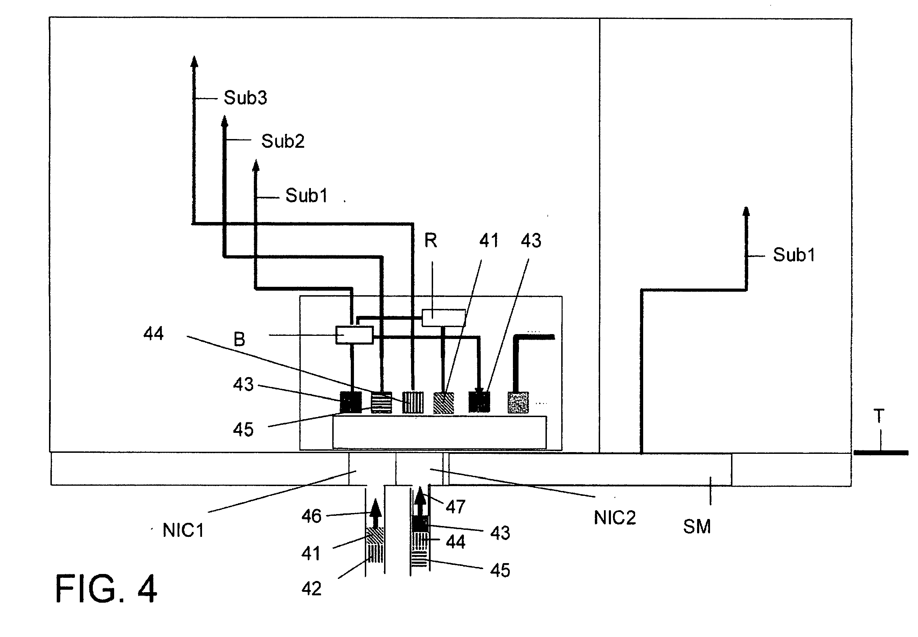

Die Fig. 4 zeigt ein weiteres Ausführungsbeispiel zur Steuerung des Industrieroboters 1, das wie folgt unter Bezugnahme auf die Fig. 4 erläutert wird:
Die Fig. 4 zeigt Datenpakete 41-45, die über Kommunikationsleitungen 46, 47 an Netzwerk-Interface Karten NIC1, NIC2 des Steuerrechners 6 des Industrieroboters 1 gesendet werden. Jedes der Datenpakete 41-45, das über eine gültige Zieladresse verfügt, wird im Steuerrechner 6 mittels der im Datenpaket-Header des relevanten Datenpakets 41-45 befindlichen Zieladresse einem, dem jeweiligen Zieladressbereich eindeutig zugeordneten Priorisierungs-Mechanismus unterzogen.

Im Falle des vorliegenden Ausführungsbeispiels hat das Datenpaket 43 den Zieladressenbereich "Dest.: IP address space A", das Datenpaket 44 den Zieladressenbereich "Dest.: IP address space B", das Datenpaket 45 den Zieladressenbereich "Dest.: IP address space C", das Datenpaket 41 den Zieladressenbereich "Dest.: IP address space D" und das Datenpaket 42 den Zieladressenbereich "Dest.: Raw Ethernet address space".

Die (standardisierte) Datenpaket-Vermittlung und die Priorisierung der Datenpakete 41-45 im Steuerrechner 6 werden auf diese Weise kombiniert, so dass jeder Kommunikationsteilnehmer am Netz, alleine durch Unterstützung des gültigen Adressierungsschemas an der Priorisierung teilnehmen kann.

Der in der Fig. 4 illustrierte Vermittlungsmechanismus basiert auf der Verwendung von sogenannten "Virtuellen Netzwerktreibern", welche in standarisierter Form unter Angabe einer IP-Adresse an einen TCP/IP Stack gebunden werden können. Erweitert werden die Vermittlungsfunktionen durch gängige Mechanismen, wie eine Learning Bridge B und einen NAT Router R. Eine Learning Bridge ("lernende Brücke") baut nach dem Einschalten automatisch Adresstabellen auf und erspart somit dem Netzmanager das manuelle Anlegen von Tabellen. NAT ist die Abkürzung für "Network Address Translation" und ist in einem Rechnernetz der Sammelbegriff für Verfahren, um automatisiert und transparent Adressinformationen in Datenpaketen durch andere zu ersetzen. Dadurch ergibt sich annähernd das Design-Muster eines Switches (Software Switch).

Der Priorisierungs-Mechanismus sorgt hierbei dafür, dass beispielsweise das anstehende Datenpaket 43 mit dem Adressierungsbereich "Dest.: IP address space A" nach Zustellung an einen Paket-Pufferspeicher des Steuerrechners 6 dort so lange nicht weiterbearbeitet wird, bis das Datenpaket 44 an die entsprechende Anwendung, z.B. "Echtzeit-Anwendung" vollständig hochgereicht worden ist.

Dieser Mechanismus gilt im Grundsatz für alle Kombinationen von empfangenen Datenpaketen 41-45 und fügt sich somit nahtlos in das gesamte Tasking-Schema des Steuerrechners 6 sowie das Anforderungsprofil bezüglich dem Betrieb verschiedener Subnetze Sub1, Sub2, Sub3 ein.

Beispielsweise wird ein Subnetz Sub1, in dem sich z.B. ein Nicht-Echtzeitbetriebssystem befindet, einfach über die Learning Bridge B und einen Austausch-Speicherbereich SM ("Shared Memory") zwischen dem Nicht-Echtzeitbetriebssystem des Subnetzes Sub1 und dem Echtzeit-Betriebssystem erreicht.

Ein weiterer Zugang zu diesem Subnetz Sub1 wird mittels des NAT Routers R geschaffen.

Es wird deutlich, dass die Kommunikation in diesem Subnetz Sub1 immer dann gedrosselt wird, sobald höherwertige Kommunikationsaufgaben und höherwertige Steuerungsaufgaben anfallen.

Dem Subnetz Sub1 sind Tasks, die nicht in Echtzeit verarbeitet zu werden brauchen, zugeordnet. Dem Subnetz Sub1 ist der (IP-)Zieladressenbereich "IP address space A" zugeordnet, dem Subnetz Sub2 ist der (IP-)Zieladressbereich "IP address space B" zugeordnet, dem Subnetz Sub3 der Zieladressbereich "address space C". Der "address space C" "kann ein von IP abweichendes Adressschema, z.B. EtherCAT, beinhalten.

Die Fig. 4 zeigt schematisch das Einfügen von Kommunikations-Tasks unterschiedlicher Prioritäten (Echtzeit Task (Subnetz Sub3) [prio 50], weiche Echtzeit Task (Subnetzt Sub2) [prio 145], keine Echtzeit Task (Subnetz Sub1) [prio 200]) in das Tasking-Schema des Steuerrechners 6. Im Falle des vorliegenden Ausführungsbeispiels sind zyklischen Robotertasks die Prioritäten [prio 100-144] und den azyklischen Robotertasks die Prioritäten [prio 146-175] zugeordnet.

Echtzeit, weiche Echtzeit und keine Echtzeit sind hierbei Einstufungen dieses implizit wirkenden Priorisierungs-Mechanismus, zyklische Robotertasks und azyklische Robotertasks veranschaulichen das Taskschema der Robotersteuerung als solche.

Die beiden Betriebssystem-Kontexte (Echtzeit und Nicht-Echtzeitbetriebssystem) werden auf einem PC betrieben, eine Trennlinie T deutet an, dass die Priorisierung und Vermittlung in Software realisiert ist.

Die Verschaltung der Bridge B und des Routers R nutzt das unterlagerte Priorisierungsschema und erlaubt schließlich den Zugang zum Subnetz Sub1 sowohl von der Netzwerk-Interface Karte NIC1 als auch von der Netzwerk-Interface Karte NIC2 aus, wobei der Zugang zum Subnetz Sub1 über die Netzwerk-Interface Karte NIC1 durch den Router R erfolgt, sodass dieser Zugang nur über bestimmte Berechtigungen freigeschaltet wird. Ein typischer Zugang über die Netzwerk-Interface Karte NIC1 ist z.B. über ein IT-Hausnetz.

## Patentansprüche

1. Verfahren zum Verwalten verfügbarer Ressourcen eines insbesondere für eine Steuerung eines Industrieroboters (1) vorgesehenen Rechensystems (6), aufweisend folgende Verfahrensschritte:
- Empfangen einer Mehrzahl von Datenpaketen (13, 14, 41-45) mittels einer Mehrzahl von Interfaces (IF1a - IF1c, IF2a, IF2b) eines Rechensystems (6), wobei jedes der Datenpakete (13, 14, 41-45) eine Zieladresse aufweist, denen durch das Rechensystem (6) vorab unterschiedliche Prioritätsklassen zugeordnet sind, und den Interfaces (IF1a - IF1c, IF2a, IF2b) die unterschiedlichen Prioritätsklassen zugeordnet sind,
- zeitliches Zuordnen von Tasks zu Ressourcen (16) des Rechensystems (6) zum Bearbeiten der einzelnen empfangenen Datenpakete (13, 14, 41-45) aufgrund der relevanten Prioritätsklasse des Interface (IF1a - IF1c, IF2a, IF2b), das das relevante Datenpaket (13, 14) empfangen hat.

2. Verfahren nach Anspruch 1, bei dem den einzelnen Interfaces (IF1a - IF1c, IF2a, IF2b) die Zieladressen zugeordnet sind, sodass die Datenpakete (13, 14) von vorab festgelegten Interfaces (IF1a - IF1c, IF2a, IF2b) empfangen werden.

3. Verfahren nach Anspruch 1 oder 2, bei dem zumindest eine der Zieladressen einem Subnetz (Sub1 - Sub3) des Rechensystems (6) zugeordnet ist, die Interfaces (IF1a - IF1c, IF2a, IF2b) virtuelle und/oder physikalische Interfaces sind, die Datenpakete (13, 14, 41-45) Ethernet-Datenpakete sind, und/oder aufweisend Verwalten der Ressourcen (16) mittels eines Echtzeitbetriebssystems.

4. Verfahren nach einem der Ansprüche 1 bis 3, aufweisend Zwischenspeichern von empfangenen Datenpaketen (13, 14) in den Interfaces (IF1a - IF1c, IF2a, IF2b) zugeordneten Speicher (15).

5. Verfahren nach Anspruch 4, aufweisend Verwerfen eines Datenpakets (14), das ein erstes Interface (IF1a) der Mehrzahl von Interfaces (IF1a - IF1c, IF2a, IF2b) empfängt, wenn der dem ersten Interface (IF1a) zugeordnete Speicher (15) voll ist und ein Datenpaket (13), das mit einem zweiten Interface (IF1b) der Mehrzahl von Interfaces (IF1a - IF1c, IF2a, IF2b) empfangen wurde und noch abgearbeitet wird oder empfangen wird, wobei die Prioritätsklasse des ersten Interface (IF1a) kleiner als die Prioritätsklasse des zweiten Interface (IF1b) ist.

6. Verfahren nach einem der Ansprüche 1 bis 5, bei dem drei verschiedene Prioritätsklassen vorgesehen sind, wobei insbesondere
- das Interface (IF1a) mit der niedrigsten Prioritätsklasse Datenpakete (14) empfängt, die für eine Datenarchivierung, eine Konfiguration des Rechensystems (6) und/oder eine Diagnose des Rechensystems (6) vorgesehen sind,
- das Interface mit der mittleren Prioritätsklasse Datenpakete empfängt, die einem an das Rechensystem (6) anschließbaren Bediengerät des Industrieroboters (1) zugeordnet ist, und/oder
- das Interface (IF1b) mit der höchsten Priorität Datenpakete (13) empfängt, die einen Informationsaustausch des Industrieroboters (1) mit wenigstens einem weiteren Industrieroboter (9) erlaubt.

7. Verfahren nach Anspruch 6, bei dem Datenpakete (13), die mit dem Interface (IF1b) empfangen werden, dem die höchste Prioritätsklasse zugeordnet ist, in Echtzeit bearbeitet werden.

8. Rechensystem insbesondere zum Steuern eines Industrieroboters (1), aufweisend Ressourcen (16), eine Mehrzahl von Interfaces (IF1a - IF1c, IF2a, IF2b), denen unterschiedliche Prioritätsklassen zugeordnet sind, und ein Betriebssystem zum Verwalten der Ressourcen (16), wobei das Rechensystems (6) eingerichtet ist, Zieladressen aufweisende Datenpakete (13, 14, 41-45) mit seinen Interfaces (IF1a IF1c, IF2a, IF2b)zu empfangen, wobei den Zieladressen durch das Rechensystem (6) vorab die unterschiedliche Prioritätsklassen zugeordnet sind und das Betriebssystem die Tasks zu den Ressourcen (16) zum Bearbeiten der einzelnen empfangenen Datenpakete (13, 14, 41-45) aufgrund des Interfaces (IF1a - IF1c, IF2a, IF2b) zeitlich zuordnet, das das relevante Datenpaket (13, 14) empfangen hat.

9. Rechensystem nach Anspruch 8, bei dem den einzelnen Interfaces (IF1a - IF1c, IF2a, IF2b) die Zieladressen zugeordnet sind, sodass die Datenpakete (13, 14) von vorab festgelegten Interfaces (IF1a - IF1c, IF2a, IF2b) empfangen werden.

10. Rechensystem nach Anspruch 8 oder 9, wobei zumindest eine der Zieladressen einem Subnetz (Sub1 - Sub3) des Rechensystems (6) zugeordnet ist, die Interfaces (IF1a - IF1c, IF2a, IF2b) virtuelle und/oder physikalische Interfaces sind, das Betriebssystem ein Echtzeitbetriebssystem ist, und/oder die Datenpakete (13, 14, 41-45) Ethernet-Datenpakete sind.

11. Rechensystem nach einem der Ansprüche 8 bis 10, aufweisend den Interfaces (IF1a - IF1c, IF2a, IF2b) zugeordnete Zwischenspeicher (15) zum Zwischenspeichern empfangener Datenpakete (13, 14).

12. Rechensystem nach Anspruch 9, das Datenpaket (14) verwirft, das ein erstes Interface (IF1a) der Mehrzahl von Interfaces (IF1a - IF1c, IF2a, IF2b) empfängt, wenn der dem ersten Interface (IF1a) zugeordnete Speicher (15) voll ist und ein Datenpaket (13), das mit einem zweiten Interface (IF1b) der Mehrzahl von Interfaces (IF1a - IF1c, IF2a, IF2b) empfangen wurde und noch abgearbeitet wird oder empfangen wird, wobei die Prioritätsklasse des ersten Interface (IF1a) kleiner als die Prioritätsklasse des zweiten Interface (IF1b) ist.

13. Rechensystem nach einem der Ansprüche 8 bis 12, bei dem drei verschiedene Prioritätsklassen vorgesehen sind, wobei insbesondere
- das Interface (IF1a) mit der niedrigsten Prioritätsklasse Datenpakete (14) empfängt, die für eine Datenarchivierung, eine Konfiguration des Rechensystems (6) und/oder eine Diagnose des Rechensystems (6) vorgesehen sind,
- das Interface mit der mittleren Prioritätsklasse Datenpakete empfängt, die einem an das Rechensystem (6) anschließbaren Bediengerät eines Industrieroboters (1) zugeordnet ist, und/oder
- das Interface (IF1b) mit der höchsten Priorität Datenpakete (13) empfängt, die einen Informationsaustausch des Industrieroboters (1) mit wenigstens einem weiteren Industrieroboter (9) erlaubt.

14. Rechensystem nach einem der Anspruche 8 bis 13, aufweisend eine Bridge (B) und einen mit der Bridge (B) verschachtelten Router (R), wobei empfangenen Datenpakete, die Nicht-Echtzeitdaten umfassen, über die Bridge (B) und dem mit der Bridge (B) verschachtelten Router (R) verarbeitet werden, und /oder aufweisend eine CPU zur Steuerung des Industrieroboters (1), auf der der Steuerung des Industrieroboters (1) zugeordnete Tasks und weitere Tasks laufen.

15. Industrieroboter, aufweisend
- eine Mehrzahl von Roboterachsen (2) und
- ein Rechensystem (6) nach einem der Ansprüche 8 bis 14 zum Steuern der Robertachsen (2).

## Claims

1. Method for managing available resources of a computer system (6) provided in particular for controlling an industrial robot (1) comprising the following method steps,
- receiving a plurality of data packets (13, 14, 41-45) by means of a plurality of interfaces (IF1a - IF1c, IF2a, IF2b) of a computer systems (6), wherein each of the data packets (13, 14, 41-45) comprises a destination address, to which different priority classes are assigned in advance by the computer system (6), and the different priority classes are assigned to the interfaces (IF1a - IF1c, IF2a, IF2b),
- chronologically assigning tasks to resources (16) of the computer system (6) for processing the individual received data packets (13, 14, 41-45) on the basis of the relevant priority class of the interface (IF1a - IF1c, IF2a, IF2b) receiving the relevant data packet (13, 14).

2. Method according to claim 1, in which the destination addresses are assigned to the individual interfaces (IF1a - IF1c, IF2a, IF2b), so that the data packets (13, 14) are received by previously determined interfaces (IF1a - IF1c, IF2a, IF2b).

3. Method according to claim 1 or 2, in which at least one of the destination addresses is assigned to a subnetwork (Sub1 - Sub3) of the computer system (6), the interfaces (IF1a - IF1c, IF2a, IF2b) are virtual and/or physical interfaces, the data packets (13, 14, 41-45) are ethernet data packets, and/or comprising managing the resources (16) by means of a real-time operating system.

4. Method according to any one of claims 1 to 3, comprising temporarily storing received data packets (13, 14) in a memory (15) assigned to the interfaces (IF1a - IF1c, IF2a, and IF2b).

5. Method according to claim 4 comprising discarding a data packet (14) which receives a first interface (IF1a) of the plurality of interfaces (IF1a - IF1c, IF2a, IF2b), when the memory (15) assigned to the first interface (IF1a) is full, and a data packet (13) that was received by a second interface (IF1b) of the plurality of interfaces (IF1a - IF1c, IF2a, IF2b) and is still to be processed or received, wherein the priority class of the first interface (IF1a) is lower than the priority class of the second interface (IF1b).

6. Method according to any one of claims 1 to 5, in which three different priority classes are provided, wherein in particular
- the interface (IF1a) with the lowest priority class receives data packets (14) which are are provided for data archiving, the configuration of the computer system (6) and/or the diagnosis of the computer system (6),
- the interface with the middle priority class receives data packets which are assigned to an operating device of the industrial robot (1) connectable to the computer system (6) and/or
- the interface (IF1b) with the highest priority receives data packets (13) which enable the information exchange of the industrial robot (1) with at least one further industrial robot (9).

7. Method according to claim 6, in which data packets (13) received with the interface (IF1b), to which the highest priority class is assigned, are processed in real time.

8. Computer system in particular for controlling an industrial robot (1), comprising resources (16), a plurality of interfaces (IF1a - IF1c, IF2a, IF2b) to which different priority classes are assigned and an operating system for managing the resources (16), wherein the computer system (6) is configured to receive data packets (13, 14, 41-45) comprising destination addresses with its interfaces (IF1a - IF1c, IF2a, IF2b), wherein the different priority classes are assigned in advance to the destination addresses by the computer system (6) and the operating system assigns the tasks chronologically to the resources (16) for processing the individual received data packets (13, 14, 41-45) on the basis of the interface (IF1a - IF1c, IF2a, IF2b) which has received the relevant data packet (13, 14).

9. Computer system according to claim 8, in which the destination addresses are assigned to the individual interfaces (IF1a - IF1c, IF2a, IF2b), so that the data packets (13, 14) are received by previously determined interfaces (IF1a - IF1c, IF2a, IF2b).

10. Computer system according to claim 8 or 9, wherein at least one of the destination addresses is assigned to a sub-network (Sub1 - Sub3) of the computer system (6), the interfaces (IF1a - IF1c, IF2a, IF2b) are virtual and/or physical interfaces, the operating system is a real-time operating system, and/or the data packets (13, 14, 41-45) are ethernet data packets.

11. Computer system according to any one of claims 8 to 10 comprising temporary memories (15) assigned to the interfaces (IFla - IF1c, IF2a, IF2b) for buffering received data packets (13, 14).

12. Computer system according to claim 9, which discards the data packet (14) which receives a first interface (IF1a) of the plurality of interfaces (IF1a - IF1c, IF2a, IF2b), when the memory (15) assigned to the first interface (IF1a) is full, and a data packet (13) that was received by a second interface (IF1b) of the plurality of interfaces ((IF1a - IF1c, IF2a, IF2b), and is still to be processed or received, wherein the priority class of the first interface (IF1a) is lower than the priority class of the second interface (IF1b).

13. Computer system according to any one of claims 8 to 12, in which three different priority classes are provided, wherein in particular
- the interface (IF1a) with the lowest priority class receives data packets (14) which are provided for data archiving, the configuration of the computer system (6) and/or the diagnosis of the computer system (6),
- the interface with the middle priority class receives data packets which are assigned to an operating device of an industrial robot (1) connectable to the computer system (6), and/or
- the interface (IF1b) with the highest priority receives data packets (13) which allows an information exchange of the industrial robot (1) with at least one additional industrial robot (9).

14. Computer system according to any one of claims 8 to 13, comprising a bridge (B) and a router (R) interconnected to the bridge (B), wherein received data packets which comprise non-real-time data are processed via the bridge (B) and the router (R) interconnected to the bridge (B) and/or comprising a CPU for controlling the industrial robot (1), on which tasks and further tasks assigned to the control of the industrial robot (1) run.

15. Industrial robot comprising
- a plurality of robot axes (2) and
- a computer system (6) according to any one of claims 8 to 14 for controlling the robot axes (2).

## Revendications

1. Procédé de gestion des ressources disponibles d'un système informatique (6) prévu en particulier pour la commande d'un robot industriel (1), présentant les étapes de procédé suivantes :
- réception d'une multitude de paquets de données (13, 14, 41-45) au moyen d'une multitude d'interfaces (IF1a - IF1c, IF2a, IF2b) d'un système informatique (6), chacun des paquets de données (13, 14, 41-45) présentant une adresse de destination auxquelles des classes de priorité différentes sont auparavant associées par le système informatique (6), et les différentes classes de priorité étant associées aux interfaces (IF1a - IF1c, IF2a, IF2b),
- attribution temporelle de tâches à des ressources (16) du système informatique (6) pour traiter les paquets de données (13, 14, 41-45) individuels reçus sur la base de la classe de priorité pertinente de l'interface (IF1a - IF1c, IF2a, IF2b) qui a reçu le paquet de données (13, 14, 41-45) pertinent.

2. Procédé selon la revendication 1, dans lequel aux interfaces (IF1a - IF1c, IF2a, IF2b) individuelles sont associées les adresses de destination, de telle sorte que les paquets de données (13, 14) sont reçus par des interfaces (IF1a - IF1c, IF2a, IF2b) prédéterminées.

3. Procédé selon la revendication 1 ou 2, dans lequel au moins une des adresses est associée à un sous-réseau (Sub1 - Sub3) du système informatique (6) les interfaces (IF1a - IF1c, IF2a, IF2b) sont des interfaces virtuelles et/ou physiques, les paquets de données (13, 14, 41-45) sont des paquets de données Ethernet, et/ou présentant la gestion des ressources (16) au moyen d'exploitation en temps réel.'

4. Procédé selon l'une des revendications 1 à 3, présentant le stockage intermédiaire de paquets de données (13, 14) reçus dans la mémoire (15) associée aux interfaces (IF1a - IF1c, IF2a, IF2b).

5. Procédé selon la revendication 4, présentant le rejet d'un paquet de données (14) qui reçoit une première interface (IF1a) de la multitude des interfaces (IF1a - IF1c, IF2a, IF2b) lorsque la mémoire (15) associée à la première interface (IF1a) est pleine et qu'un paquet de données (13) a été reçu avec une deuxième interface (IF1B) de la multitude d'interfaces (IF1a - IF1c, IF2a, IF2b) et est encore traité ou reçu, la classe de priorité de la première interface IF1a) étant plus faible que la classe de priorité de la deuxième interface (IF1b) .

6. Procédé selon l'une des revendications 1 à 5, dans lequel sont prévues trois différentes classes de priorité, dans lequel en particulier,
- l'interface (IF1a) avec la classe de priorité la plus faible reçoit des paquets de données (14) qui sont prévus pour un archivage de données, pour une configuration du système informatique (6) et/ou pour un diagnostic du système informatique (6),
- l'interface avec la classe de priorité moyenne reçoit des paquets de données qui sont associés à un appareil de commande du robot industriel (1), qui peut être branché au système informatique (6), et/ou
- l'interface (IF1b) reçoit avec la priorité la plus forte des paquets de données (13) qui permettent un échange d'informations du robot industriel (1) avec au moins un autre robot industriel (9).

7. Procédé selon la revendication 6, dans lequel les paquets qui sont reçus avec l'interface (IF1b), à laquelle est associée la classe de priorité la plus forte, sont traités en temps réel.

8. Système informatique en particulier pour la commande d'un robot industriel (1), présentant des ressources (16), une multitude d'interfaces (IF1a - IF1c, IF2a, IF2b) auxquelles sont associées des classes de priorité différentes, et un système d'exploitation pour la gestion des ressources (16), le système informatique (6) étant prévu pour recevoir avec ses interfaces (IF1a - IF1c, IF2a, IF2b) des paquets de données (13, 14, 41-45) présentant des adresses de destination, les différentes classes de priorité étant associées auparavant par le système informatique (6) aux adresses de destination, et le système d'exploitation associant dans le temps les tâches aux ressources (16) pour traiter les paquets de données (13, 14, 41-45) individuels reçus sur la base de l'interface (IF1a - IF1c, IF2a, IF2b) qui a reçu le paquet de données (13, 14) pertinent.

9. Système informatique selon la revendication 8, dans lequel les adresses de destination sont associées aux interfaces individuelles (IF1a - IF1c, IF2a, IF2b), de telle sorte que les paquets de données (13, 14) sont reçus par des interfaces (IF1a - IF1c, IF2a, IF2b) prédéterminées.

10. Système informatique selon la revendication 8 ou 9, dans lequel une des adresses de destination est associée à un sous-réseau (Sub1 - Sub3) du système informatique (6), les interfaces (IF1a - IF1c, IF2a, IF2b) sont des interfaces virtuelles et/ou physiques, le système d'exploitation est un système d'exploitation en temps réel, et/ou les paquets de données (13, 14, 41-45) sont des paquets de données Ethernet.

11. Système informatique selon l'une des revendications 8 à 10, présentant des mémoires intermédiaires (15) associées aux interfaces (IF1a - IF1c, IF2a, IF2b) pour le stockage intermédiaire de paquets de données reçus.

12. Système informatique selon la revendication 9, qui rejette le paquet de données (14), qui reçoit une première interface (IF1a) de la multitude d'interfaces (IF1a - IF1c, IF2a, IF2b) lorsque la mémoire (15) associée à la première interface (IF1a) est pleine et qu'un paquet de données (13) a été reçu avec une deuxième interface (IF1B) de la multitude d'interfaces (IF1a - IF1c, IF2a, IF2b) et est encore traité ou reçu, la classe de priorité de la première interface (IF1a) étant plus faible que la classe de priorité de la deuxième interface (IF1b).

13. Procédé selon l'une des revendications 8 à 12, dans lequel sont prévues trois différentes classes de priorité, dans lequel en particulier,
- l'interface (IF1a) avec la classe de priorité la plus faible reçoit des paquets de données qui sont prévus pour un archivage de données, pour une configuration du système informatique (6) et/ou pour un diagnostic du système informatique (6),
- l'interface avec la classe de priorité moyenne reçoit des paquets de données qui sont associés à un appareil de commande du robot industriel (1), qui peut être branché au système informatique (6), et/ou
- l'interface (IF1b) reçoit avec la priorité la plus forte des paquets de données (13) qui permettent un échange d'informations du robot industriel (1) avec au moins un autre robot industriel (9).

14. Système informatique selon l'une des revendications 8 à 13, présentant un pont (B) et un routeur (R) imbriqué dans le pont (B), des paquets de données reçus, qui comprennent des données non temps réel, étant traités via le pont (B) et le routeur (R) imbriqué dans le pont (B), et/ou présentant un processeur pour la commande du robot industriel (1), sur lequel opèrent les tâches associées à la commande du robot industriel (1) et d'autres tâches.

15. Robot industriel, présentant
- une multitude d'axes de robot (2) et
- un système informatique (6) selon l'une des revendications 8 à 14 pour la commande des axes de robot (2).
